# EUROPÄISCHE PATENTSCHRIFT

(11) **EP 2 996 445 B1**
(45) Veröffentlichungstag und Bekanntmachung des Hinweises auf die Patenterteilung: **13.02.2019**
(21) Anmeldenummer: 15002574.0
(22) Anmeldetag: 01.09.2015
(51) Int. Cl.: H05B 41/288, H05B 41/292, H05B 41/38

(54) **VORSCHALTGERÄT UND VERFAHREN ZUR STEUERUNG EINES VORSCHALTGERÄTS**
BALLAST AND METHOD OF CONTROLLING A BALLAST
BALLAST ET PROCEDE DE COMMANDE D'UN BALLAST

(30) Priorität: 05.09.2014 DE 102014013353
(43) Veröffentlichungstag der Anmeldung: 16.03.2016
(73) Patentinhaber: B & S Elektronische Geräte GmbH, 38114 Braunschweig (DE)
(72) Erfinder: BRAUCKMANN, Wilfried, DE - 38176 Wendeburg (DE); UNZNER, Norbert, DE - 38173 Dettum (DE)
(74) Vertreter: Lins, Edgar

(56) Entgegenhaltungen:
- EP-A1- 0 708 579
- DE-T2- 69 820 022

## Beschreibung

Die Erfindung betrifft ein Vorschaltgerät für eine mit einem Lichtbogen brennende Lampe, mit einer eine Gleichspannung abgebenden Gleichspannungsstufe und einer Umschalteinrichtung zum Umschalten der Stromrichtung an zum Anschluss der Lampe vorgesehenen Ausgängen des Vorschaltgeräts mit einer Wechselfrequenz von mehr als 500 Hz und mit einer Verstelleinrichtung für die Wechselfrequenz, wobei eine Analyseeinrichtung für das Brennverhalten des Lichtbogens vorhanden ist, die Verstelleinrichtung eine Einstellung der Wechselfrequenz auf einen Startwert vornimmt und mit der Analyseeinrichtung das Brennverhalten des Lichtbogens bestimmt wird.

Die Erfindung betrifft ferner ein Verfahren zur Steuerung eines derartigen Vorschaltgeräts.

Derartige Vorschaltgeräte werden insbesondere für Metalldampflampen verwendet. Dabei wird üblicherweise eine einphasige Netzwechselspannung gleichgerichtet und mit einem Aufwärtswandler eine vergrößerte Gleichspannung erzeugt und zwischengespeichert. Aus dieser Gleichspannung wird eine rechteckförmige Wechselspannung mit einem geregelten Rechteckstrom für die Gasentladungslampe erzeugt. Die Regelung des Rechteckstroms erfolgt über einen Serienschalter, der hochfrequent getaktet ein- und ausgeschaltet wird, sodass eine Stromregelung durch eine Frequenzänderung und/oder eine Änderung der jeweiligen Öffnungszeiten des Schalters (Pulsweitenmodulation) möglich ist.

Die Herstellung der rechteckförmigen Wechselspannung aus der Gleichspannung erfolgt durch geeignet angesteuerte Schalter, mit denen die Stromrichtung am Ausgang des Vorschaltgeräts umschaltbar ist. Die Wechselfrequenz für die Umschaltung der Stromrichtung betrug üblicherweise ca. 75 Hz. Mit diesem Rechteckstrom, der mit einer Umschaltzeit von < 10 µs generiert wird, ist das abgestrahlte Licht der Lampe nahezu flickerfrei. Bei Filmaufnahmen mit einem analogen 16 mm oder 35 mm Film entstehen unabhängig von der Filmgeschwindigkeit keine Flickerprobleme. Aufgrund der Verwendung neuer digitaler Filmkameras ist jedoch das Aufnahmeverfahren für die einzelnen Bilder eines Films grundlegend geändert worden. Es werden High-Speed-Kameras mit mehreren tausend Bildern pro Sekunde verwendet, bei denen ein noch minimal vorhandener Flicker im Licht zu Intensitätsschwankungen bei den Aufnahmen führen kann. Zur Vermeidung solcher Flickerprobleme ist daher die Wechselfrequenz erhöht worden und liegt über 500 Hz, vorzugsweise über 800 Hz, meist oberhalb von 900 Hz. Bei dieser Wechselfrequenz ist auch bei High-Speed-Digitalkameras kein Flicker mehr zu erkennen.

Die hohe Wechselfrequenz und die sich daraus ergebenden Oberschwingungen führen jedoch zu dem Nachteil, dass der in der Lampe brennende Lichtbogen aufgrund von Resonanzerscheinungen unruhig wird. Es existieren in dem Bereich oberhalb von 500 Hz mehrere Resonanzpunkte einer Lampe, in deren Nähe der Lichtbogen unruhig brennt. Zwischen zwei solchen Resonanzpunkten gibt es jedoch ruhige Bereiche, in denen sich der Lichtbogen stabil und ruhig verhält. Diese Resonanzpunkte liegen jedoch nach Leistungsklasse der Lampe, Alterung und bedingt durch Fertigungstoleranzen bei unterschiedlichen Frequenzen.

Die Anmelderin hat daher Vorschaltgeräte mit einer hohen Wechselfrequenz von > 900 Hz auf den Markt gebracht, bei denen mit einem Potentiometer manuell die Wechselfrequenz geringfügig geändert werden kann, um die Wechselfrequenz in ein resonanzfreies Frequenzfenster zu schieben. Die manuelle Einstellung bedingt jedoch ein genaues Beobachten und eine subjektive Beurteilung des in der Lampe brennenden Lichtbogens. Eine manuelle Verstellung wird daher nur vorgenommen werden, wenn bereits ein deutliches Flackern der Lampe auftritt.

Aus DE 698 20 022 T2 (EP 0 941 637 B1) ist eine Steuerung für eine Hochdruckgasentladungslampe bekannt, die speziell eine Gasentladungslampe mit einer niedrigen Leistung, beispielsweise 35 W, ist. Besonders geeignet ist eine Lichtbogenröhre aus polykrystallinem Aluminiumoxid, bei der sich ein besonders breiter Bereich für einen stabilen, flickerfreien Lichtbogen ergibt. Das Steuerungsverfahren sieht vor, den in Frage kommenden Bereich in diskrete, voneinander gleich beabstandete Betriebsfrequenzen aufzuteilen und für die diskreten Betriebsfrequenzen Messungen des Lichtbogenverhaltens auszuführen. Als Ergebnis der Messungen wird jeder Betriebsfrequenz ein Stabilitätsfaktor zugeordnet. Der Betrieb der Lampe erfolgt zweckmäßigerweise auf der Betriebsfrequenz mit dem höchsten Stabilitätsfaktor. Stellt sich bei dieser Betriebsfrequenz eine Instabilität ein, wird auf eine andere Betriebsfrequenz mit dem nächst größten Stabilitätsfaktor umgeschaltet. Hierfür müssen die Betriebsfrequenzen über den gesamten in Betracht kommenden Frequenzbereich ausgemessen worden sein.

Ein ähnliches Verfahren ist durch EP 0 708 579 A1 bekannt. Hierbei wird in einer Testphase der gesamte in Frage kommende Frequenzbereich mit gleichmäßig voneinander beabstandeten Betriebsfrequenzen durchgemessen. Auch hier sind zahlreiche Messungen erforderlich, die jedoch auch nur in einer Testphase beim Starten des Geräts durchgeführt werden. Eine dynamische Regelung während des Betriebs findet nicht statt.

Der Erfindung liegt daher die Aufgabe zugrunde, ein Vorschaltgerät der eingangs erwähnten Art so steuerbar zu machen, dass eine anwenderfreundliche Bedienung erreicht wird.

Zur Lösung dieser Aufgabe ist erfindungsgemäß ein Vorschaltgerät der eingangs erwähnten Art dadurch gekennzeichnet, dass die Verstelleinrichtung für eine Einstellung der Wechselfrequenz bei dem Startwert auf zwei nahe beieinander liegenden Test-Wechselfrequenzen eingerichtet ist und die Analyseeinrichtung das Brennverhalten bei diesen Test-Wechselfrequenzen bestimmt und die Verstelleinrichtung eine Verstellung der Wechselfrequenz um einen Frequenzschritt in die durch diejenige Test-Wechselfrequenz, bei der die Analyseeinrichtung ein ruhigeres Brennverhalten festgestellt hat, vorgegebene Richtung vornimmt, wenn die Analyseeinrichtung bei keiner der analysierten Test-Wechselfrequenzen ein ausreichend ruhiges Brennverhalten festgestellt hat, wobei zur Feststellung des Brennverhaltens die Analyseeinrichtung für eine Auswertung von Intensitätsschwankungen, indem für eine Test-Wechselfrequenz eine vorbestimmte Anzahl von Intensitätsbestimmungen vorgenommen und aus den Unterschieden der gemessenen Intensitäten ein erster Signalwert bestimmt wird, und für eine Bestimmung eines zweiten Signalwerts aus einer Mittelung der bestimmten Intensitäten ausgelegt ist und als Kriterium für ein ausreichend ruhiges Brennverhalten die Unterschreitung eines ersten vorgegebenen Schwellwerts durch den ersten Signalwert bei gleichzeitiger Überschreitung eines zweiten vorgegebenen Schwellwerts durch den zweiten Signalwert dient.

Die Aufgabe wird ferner mit einem Verfahren zur Steuerung eines Vorschaltgeräts für eine mit einem Lichtbogen brennende Lampe, mit einer eine Gleichspannung abgebenden Gleichspannungsstufe und einer Umschalteinrichtung zum Umschalten der Stromrichtung an zum Anschluss der Lampe vorgesehenen Ausgängen des Vorschaltgeräts mit einer Wechselfrequenz von mehr als 500 Hz und mit einer Verstelleinrichtung für die Wechselfrequenz, wobei eine Einstellung der Wechselfrequenz auf einen Startwert vorgenommen und dort das Brennverhalten des Lichtbogens festgestellt wird, gelöst, indem das Brennverhalten des Lichtbogens auf zwei nahe beieinander liegenden Test-Wechselfrequenzen bestimmt wird und eine weitere Verstellung der Wechselfrequenz um einen Frequenzschritt in die durch diejenige Test-Wechselfrequenz, bei der ein ruhigeres Brennverhalten festgestellt worden ist, vorgegebene Richtung erfolgt, wenn bei keiner der analysierten Test-Wechselfrequenzen ein ausreichend ruhiges Brennverhalten festgestellt worden ist, wobei für die Feststellung des Brennverhaltens Intensitätsschwankungen ausgewertet werden, indem für eine Test-Wechselfrequenz eine vorbestimmte Anzahl von Intensitätsbestimmungen vorgenommen wird und aus den Unterschieden der gemessenen Intensitäten ein erster Signalwert bestimmt wird, zugleich ein zweiter Signalwert aus den gemittelten Intensitäten bestimmt wird und als Kriterium für ein ausreichend ruhiges Brennverhalten die Unterschreitung eines ersten vorgegebenen Schwellenwerts durch den ersten Signalwert bei gleichzeitiger Überschreitung eines zweiten vorgegebenen Schwellenwerts durch den zweiten Signalwert dient.

Das erfindungsgemäße Vorschaltgerät erlaubt somit eine automatische Einstellung der über 500 Hz, vorzugsweise über 800 Hz und insbesondere über 900 Hz liegenden Wechselfrequenz auf einen Bereich, bei dem der Lichtbogen in der Lampe ruhig brennt.

Die Feststellung des Brennverhaltens erfolgt durch eine Bestimmung von Intensitätswerten durch nacheinander erfolgende Messungen über eine bestimmte Messzeit. Beispielsweise können für eine bestimmte Test-Wechselfrequenz 256 Messungen vorgenommen werden. Aus den dabei festgestellten Unterschieden der gemessenen Intensitäten, beispielsweise aus der Differenz zwischen der gemessenen maximalen Intensität und der gemessenen minimalen Intensität, wird ein erster Signalwert bestimmt, der ein Maß für die Intensitätsschwankungen des Lichtbogens darstellt.

Da es möglich ist, dass die Lampe für einen Frequenzbereich ruhig brennt, dort aber mit einem verringerten Wirkungsgrad, ist es zweckmäßig, aus den über die Messungen gemittelten Intensitätswerten einen zweiten Signalwert zu bestimmen. Durch Festlegung eines Minimalschwellenwerts für den zweiten Signalwert wird sichergestellt, dass ein ruhiger Brennbereich für den Lichtbogen in Verbindung mit einem guten Wirkungsgrad der Lampe automatisch eingestellt wird.

Die Analyseeinrichtung kann das Brennverhalten des Lichtbogens über eine Messung der Intensität vornehmen. Hierzu ist es denkbar, einen optischen Sensor an der Lampe zu positionieren, der ein dem Lichtstrom proportionales Signal generiert. Eine derartige Anordnung wird nur in Ausnahmefällen sinnvoll sein, da sie die Anordnung des Sensors im Bereich der Lampe erfordert.

Besonders bevorzugt ist es daher, die Messung des Brennverhaltens des durch das Vorschaltgerät gespeisten Lichtbogens im Vorschaltgerät selbst vorzunehmen. Der Erfindung liegt die Erkenntnis zugrunde, dass in Abhängigkeit von dem Brennverhalten des Lichtbogens sowohl die der Lampe zugeführte Spannung als auch der Speisestrom für die Lampe einen geringen Wechselsignalanteil enthalten, also eine gewisse Schwankung der Gleichspannung bzw. des Gleichstroms. Hieraus resultiert, dass die Intensität des Lichtbogens im Vorschaltgerät selbst gemessen werden kann, und zwar durch Messung der Schwankungen der Gleichspannung oder der Schwankungen des Gleichstroms, die zur Speisung der Lampe im Vorschaltgerät generiert und mit hochfrequenter Polumschaltung der Lampe zugeführt werden.

In einer praktischen Ausführungsform wird der Strom im Vorschaltgerät gemessen, der durch die Lampe geleitet wird, wenn diese gezündet ist. Dabei ist es zweckmäßig, den Strom vor der Umschaltungseinrichtung für die Stromrichtung zu messen, weil auf diese Weise die Umschalteffekte durch die Stromrichtungsumkehr weniger zum Tragen kommen.

Es ist bekannt, den Strom durch die Lampe im Vorschaltgerät zu regeln, und zwar mit einem hochfrequent getakteten Serienschalter. Bevorzugt ist für die vorliegende Erfindung die Stromregelung über eine Pulsweitenmodulation, also mit einer während der Regelung konstanten Schaltfrequenz des Schalters. Es hat sich herausgestellt, dass ein verbessertes ruhiges Brennverhalten des Lichtbogens erzielbar ist, wenn die Schaltfrequenz für den Regelungsschalter mit der Wechselfrequenz für die Umschaltung der Stromrichtung synchronisiert wird. Dies gelingt in einfacher Weise dadurch, dass die Steuerfrequenz für den Regelungsschalter in geeigneter Weise heruntergeteilt wird und zugleich als Wechselfrequenz für die Umschalteinrichtung des Stromflusses dient. In diesem Fall wird die erfindungsgemäße Verstellung der Wechselfrequenz indirekt bewirkt, indem die Taktfrequenz für den Regelungsschalter - und damit die heruntergeteilte Wechselfrequenz - in der erfindungsgemäßen Weise geändert wird.

Als Kriterium für eine geeignete Wechselfrequenz für ein ausreichend ruhiges Brennverhalten wird die Unterschreitung eines ersten vorgegebenen Schwellenwerts für den ersten Signalwert bei gleichzeitiger Überschreitung eines zweiten vorgegebenen Schwellenwerts durch den zweiten Signalwert behandelt. Auf diese Weise wird sichergestellt, dass ein ruhiges Brennverhalten mit einem hohen Wirkungsgrad der Lampe gemeinsam eingestellt wird.

Die Erfindung ermöglicht somit eine automatische Einstellung eines ruhigen Brennverhaltens des Lichtbogens in der Lampe durch das Vorschaltgerät. Dies ist besonders vorteilhaft, weil es sich herausgestellt hat, dass die Resonanzerscheinungen, die zu einem unruhigen Brennverhalten der Lampe führen, von der momentanen Position der Lampe abhängen. Ist die Lampe in einer Leuchte eingebaut, führt beispielsweise das Nachführen der Leuchte in einer Filmszene bereits zu einem veränderten Brennverhalten. Ähnliches gilt für eine Leistungseinstellung (Dimmung) der Lampe, die ebenfalls zu einem veränderten Brennverhalten aufgrund wandernder Resonanzfrequenzen führt. Es ist ohne weiteres ersichtlich, dass derartige Effekte regelmäßig nicht mit bloßem Auge erkennbar sind und eine manuelle Einstellung einer veränderten Wechselfrequenz keinen nachhaltigen Erfolg bringen kann.

Die automatische Änderung der Wechselfrequenz gelingt erfindungsgemäß dadurch, dass die Messungen bei zwei nahe nebeneinanderliegenden (beispielsweise um ein Hertz auseinanderliegenden) Wechselfrequenzen durchgeführt werden und dass durch den Vergleich der Messergebnisse für die beiden Test-Wechselfrequenzen festgestellt wird, in welcher Richtung die beiden nächsten Test-Wechselfrequenzen gewählt werden. Diejenige Wechselfrequenz, die von den beiden Test-Wechselfrequenzen das günstigere Brennverhalten gezeigt hat, wird als Ausgangspunkt für den nächsten Frequenzschritt gewählt, sodass die nächsten Test-Wechselfrequenzen der sich als besser herausgestellten Test-Wechselfrequenz benachbart sind. Auch dieser Frequenzschritt kann beispielsweise ein Hertz betragen, sodass der Abstand der nächsten neuen Test-Wechselfrequenz zur früheren Test-Wechselfrequenz etwa ein Hertz ist.

Auf diese Weise gelingt es, eine Regelungsrichtung dynamisch festzulegen und die Regelung regelmäßig in kurzer Zeit erfolgreich abzuschließen.

Die Erfindung soll im Folgenden anhand von in der Zeichnung dargestellten Ausführungsbeispielen näher erläutert werden. Es zeigen:
- Figur 1: ein Blockschaltbild einer ersten Ausführungsform eines erfindungsgemäßen Vorschaltgeräts;
- Figur 2: Kurvenverläufe zur Verdeutlichung des Brennverhaltens einer Leuchte bei einem Betrieb mit 50%, 75% und 100% der Nennleistung;
- Figur 3: ein Blockschaltbild einer zweiten Ausführungsform eines erfindungsgemäßen Vorschaltgeräts.

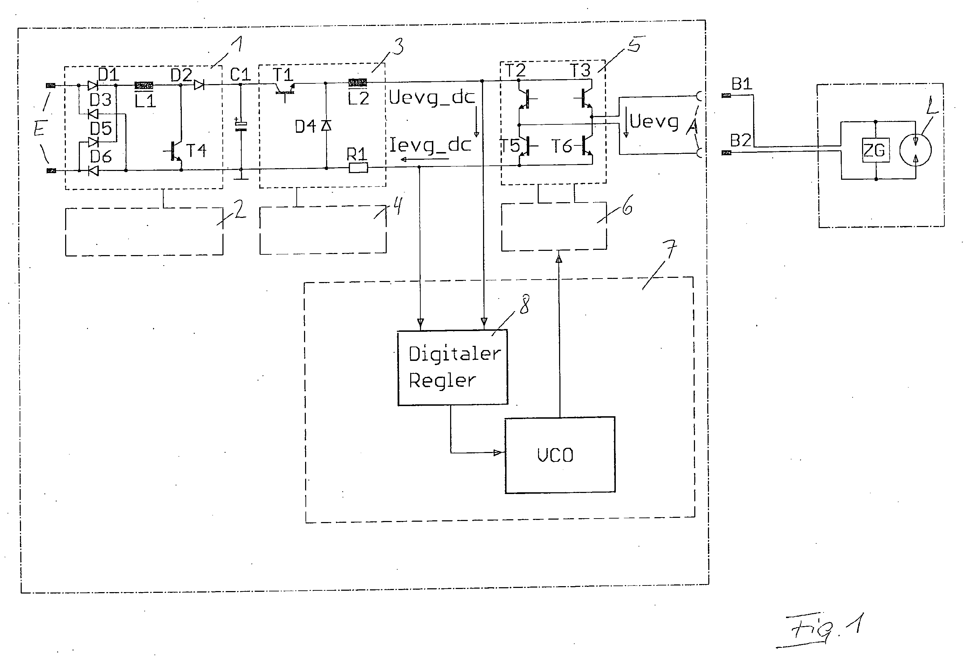

Das in Figur 1 dargestellte Vorschaltgerät weist Eingangsklemmen E auf, denen eine übliche einpolige Wechselspannung zugeführt wird. Die Wechselspannung wird über eine Gleichrichterbrücke mit den Dioden D1, D3, D5 und D6 gleichgerichtet, sodass eine pulsierende Gleichspannung entsteht. Eine Serieninduktivität L1 ist in Serie mit einer Diode D2 mit der positiven Platte eines Speicherkondensators C1 verbunden, dessen andere Platte an Masse liegt. Mit einem Schalttransistor T4, der den Pfad zwischen der Induktivität L1 und der Diode D2 an Masse legen kann, bildet die Anordnung einen Aufwärtswandler, sodass die pulsierende Gleichspannung wesentlich erhöht wird und am Speicherkondensator C1 in geglätteter Form anliegt. Die Platten des Speicherkondensators C1 bilden somit den Ausgang einer Gleichspannungsstufe 1, die mit einer Steuerung 2 für den Transistorschalter T4 des Aufwärtswandlers verbunden ist.

An den Speicherkondensator C1 schließt sich eine Stromregelstufe 3 mit einem Serienschalter T1 und einer Serieninduktivität L2 an. Eine gegen die Polungsrichtung des Speicherkondensators C1 geschaltete Leerlaufdiode D4 ist mit Masse verbunden. In dem mit Masse verbundenen Rücklaufzweig befindet sich ein Messwiderstand R1, an dem die momentane Stromstärke als Spannungswert von einer Steuerung 3 abgegriffen und zu Steuersignalen für das Durchschalten des Serientransistors T1 verwendet wird. Die Stromsteuerung kann in an sich bekannter Weise durch eine Frequenzänderung oder eine Impulsweitenänderung erfolgen.

An den Ausgang der Stromregelstufe schließt sich eine Schalterstufe 5 in Form einer Schalterbrücke aus vier Schalttransistoren T2, T3, T5, T6 an, mit der die am Ausgang der Serieninduktivität L2 anstehende positive Gleichspannung abwechselnd auf eine von zwei Ausgangklemmen A des Vorschaltgeräts gelegt wird. Die andere Klemme A wird entsprechend mit Masse verbunden. In der zeichnerischen Darstellung werden die jeweils diagonal befindlichen Schalttransistoren T2, T6 einerseits und T3, T5 andererseits jeweils gleichzeitig ein- und ausgeschaltet, und zwar die Schalttransistoren T2, T6 im Wechsel mit den Schalttransistoren T3, T5. Eine entsprechende Schaltersteuerung 6 generiert die Steuersignale für die Basen bzw. Gates der Schalttransistoren T2, T3, T5, T6.

An die Klemmen A des Vorschaltgeräts sind entsprechende Kontakte B1, B2 einer Lampe L angeschlossen. In der Lampe L sind schematisch zwei Elektroden dargestellt, zwischen denen sich ein Lichtbogen ausbildet, wenn die Lampe L gezündet ist. Parallel zu den beiden Elektroden ist ein Zündgerät ZG geschaltet, das in üblicher Weise die Zündung der Lampe mit einem erhöhten Spannungsstoß bewirkt. Die Elektroden der Lampe L müssen von einem Strom durchflossen werden, dessen Stromrichtung wechselt, damit die Elektroden nicht einseitig abgenutzt werden und dadurch die Lebensdauer der Lampe L herabsetzen. Der Wechsel der Stromrichtung durch die Lampe L wird durch die Schalterstufe 5 bewirkt.

Die Wechselfrequenz für die Stromrichtung wird durch einen Oszillator VCO bestimmt, der die Wechselfrequenz für die Schaltersteuerung 6 vorgibt.

Der Oszillator VCO befindet sich in einer Frequenzregelstufe 7 und ist als spannungsgesteuerter Oszillator VCO ausgebildet. In der Frequenzregelstufe 7 befindet sich ein digitaler Regler 8, der eine Analyseeinrichtung beinhaltet, mit der die der Schalterstufe 5 zugeführte Gleichspannung oder der durch die Lampe L fließende Gleichstrom abgetastet wird, um Aussagen über das Brennverhalten der Lampe zu gewinnen. Bevorzugt wird der Lampenstrom gemessen. Für eine durch den VCO eingestellte Test-Wechselfrequenz werden in dem Ausführungsbeispiel 256 Messwerte für die jeweilige momentane Stromstärke genommen. Aus der Differenz der gemessenen maximalen Stromstärke und der gemessenen minimalen Stromstärke wird ein erster Signalwert gebildet, der die Fluktuation des Lichtlampenstroms - und damit des Lichtstroms - während der Messung repräsentiert. Gleichzeitig wird der Gleichstromanteil, also die über die Messungen gemittelte Stromstärke bestimmt, um eine Aussage über die Intensität des Lampenstroms - und damit des Lichtstroms zu erhalten.

In der oben dargestellten Weise wird durch den digitalen Regler 8 entschieden, ob die momentan eingestellte Wechselfrequenz zu einem ausreichend ruhigen Brennverhalten der Lampe L geführt hat oder nicht, indem der durch die Messungen gebildete erste Signalwert und der zweite Signalwert mit vorgegebenen Schwellenwerten verglichen werden.

Ist ein ausreichend ruhiges Brennverhalten noch nicht festgestellt worden, steuert der digitale Regler 8 den VCO so, dass in Richtung der als besser festgestellten Test-Wechselfrequenz ein Frequenzschritt des VCO vorgenommen wird, wodurch die Schwingfrequenz des VCO so verstellt wird, dass sich die nächste Test-Wechselfrequenz um etwa ein Hertz von der vorher als günstiger festgestellten Test-Wechselfrequenz unterscheidet.

Die Schaltungsanordnung ist so ausgelegt, dass ein bevorzugter Frequenzbereich zwischen 900 und 1200 Hz für die Wechselfrequenz durchfahren werden kann. Die Verstellung erfolgt digital in 256 Schritten, sodass jeder Frequenzschritt etwas mehr als ein Hertz beträgt.

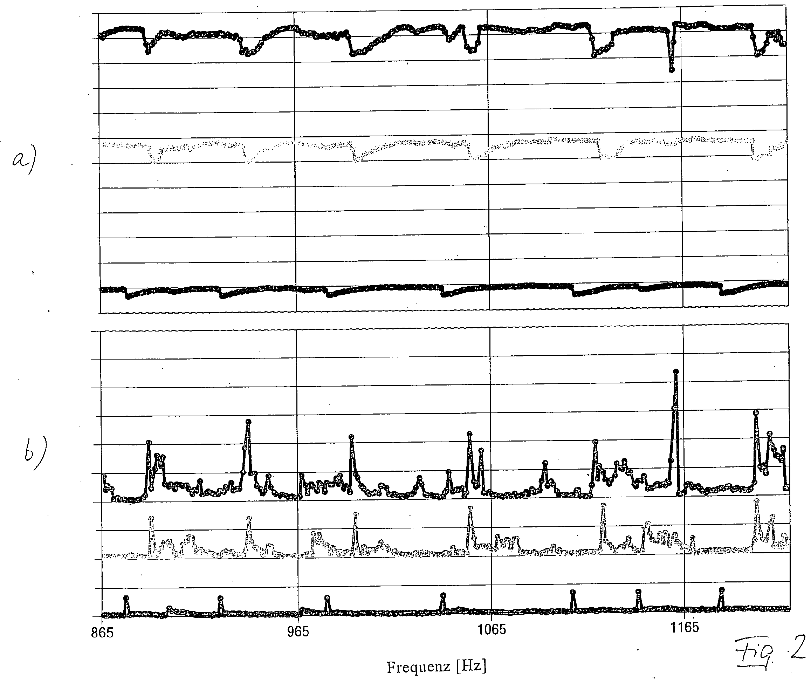

Figur 2 verdeutlicht ein Einstellproblem, das erfindungsgemäß gelöst wird.

Im oberen Teil der Grafik (Figur 2a)) sind gemessene Mittelwerte für den durch die Lampe fließenden Strom bei einer Verstellung zwischen 865 Hz und etwa 1200 Hz aufgetragen. Die untere Kurve zeigt den Verlauf des Mittelwerts, also der Lichtintensität, für den Betrieb einer Lampe mit 50 % der Nennleistung, die mittlere Kurve für 75 % der Nennleistung und die obere Kurve für 100 % der Nennleistung. Es ist deutlich zu erkennen, dass in allen drei Kurven Frequenzbereiche mit etwa konstantem Strom - entsprechend einer etwa konstanten Lichtintensität - entstehen, dass aber für bestimmte Frequenzen Einbrüche zu erkennen sind, also verminderte Lichtintensitäten. In Abhängigkeit von dem Dimmgrad sind diese Frequenzen jedoch unterschiedlich, wie an dem Vergleich der Kurven für 50 % Leistung und 75 % Leistung ohne weiteres zu erkennen ist. Bei 100 % Leistung liegen Einbrüche etwa an dergleichen Stelle wie bei 75 % der Nennleistung vor, jedoch entstehen zusätzliche Einbrüche durch zusätzliche Resonanzerscheinungen.

Im unteren Teil der Figur 2 (Figur 2b)) sind ebenfalls drei Kurven aufgezeichnet, die das Maß des Wechselanteils für die bei jeder Frequenz durchgeführten 256 Messungen darstellen. Auch hier zeigt die untere Kurve den Betrieb der Lampe mit 50 % der Nennleistung, die mittlere mit 75 % der Nennleistung und die obere mit 100 % der Nennleistung. Es zeigt sich, dass ein unruhiges Brennen bei 50 % der Nennleistung an ganz anderen Stellen auftritt als bei 75 % der Nennleistung. Bei 100 % der Nennleistung treten zusätzliche Frequenzen auf, an denen ein stark unruhiges Signal entsteht (Resonanzpunkte).

Es wird aus den Kurven der Figur 2 deutlich, dass es praktisch nicht möglich ist, für eine dimmbare Lampe eine Wechselfrequenz vorher zu bestimmen, auf der mit Sicherheit einerseits kein Einbruch der Lichtintensität stattfindet und andererseits ein möglichst ruhiges Brennen mit wenig schwankender Lichtintensität entsteht.

Durch die vorliegende Erfindung wird die Regelung auf eine ein ruhiges Brennen gewährleistende Wechselfrequenz ständig aktualisiert, sodass auch den Änderungen der Kurven gemäß Figur 2, aufgrund einer Änderung der Lampenposition entstehen, automatisch Rechnung getragen wird.

Wird eine Lampe eingeschaltet und der Lichtbogen gezündet, wird für die Regelung zunächst ein Gleichgewichtszustand abgewartet, in dem sich die Stromstärke/Lichtstärke nach dem Zünden des Lichtbogens halbwegs konstant eingestellt hat. Für das Starten der Regelung kann es zweckmäßig sein, über den digitalen Regler 8 dem VCO einige, beispielsweise fünf, unterschiedliche Startwerte in dem Verstellbereich von beispielsweise 800 oder 900 bis 1200 Hz vorzugeben, um unter den aktuellen Einsatzbedingungen einen möglichst günstigen Frequenzbereich auszuwählen. Die Startwerte sind einprogrammiert. Ergeben die Messungen an den Startwerten, dass eine erfolgversprechende Regelung ausgeführt werden kann, weil bereits halbwegs stabile Brennbedingungen, wenn auch noch nicht optimiert, erreichbar sind, wird die Regelung an einem geeigneten Startwert begonnen. Ergeben die Startwerte noch keinen erfolgversprechenden Ausgangspunkt können Ersatz-Startwerte herangezogen werden, deren Lage im digitalen Regler 8 ebenfalls abgelegt sind. Nach der Auswahl eines geeigneten Startwerts beginnt die Regelung wie beschrieben.

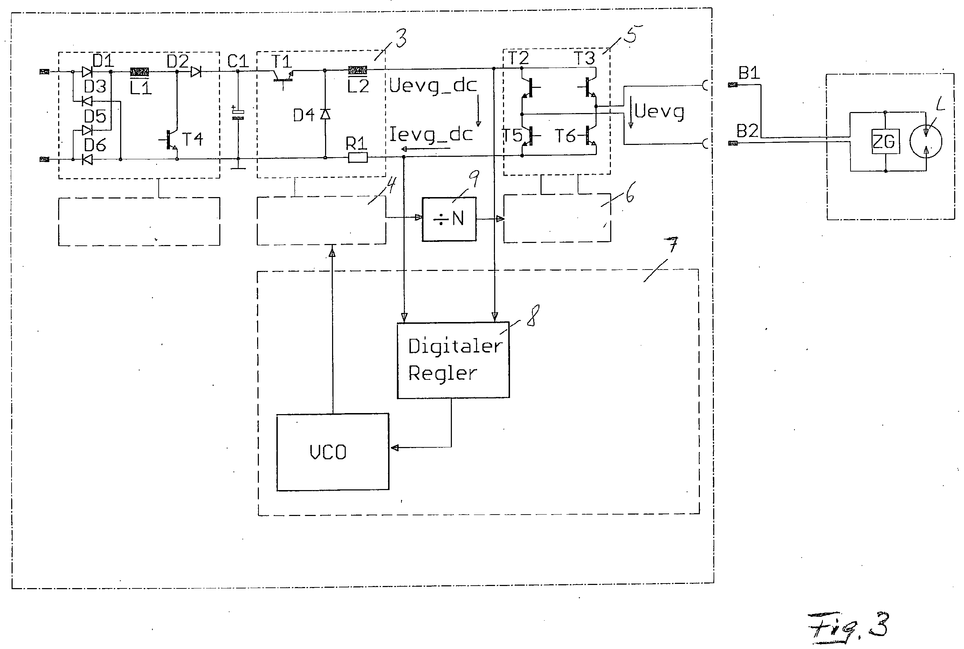

Figur 3 zeigt eine zweite Ausführungsform eines erfindungsgemäßen Vorschaltgeräts, das sich von der ersten Ausführungsform lediglich dadurch unterscheidet, dass der VCO nicht auf die Schaltersteuerung 6 einwirkt, sondern bereits auf die Steuerung 4 für den Serienschalter T1 der Stromregelstufe 3. Der VCO ist daher für eine wesentlich höhere Frequenz ausgelegt. Diese Frequenz wird durch einen Frequenzteiler 9 heruntergeteilt auf den Einsatzbereich, der beispielsweise zwischen 900 und 1200 Hz liegt. Teilt der Frequenzteiler 9:24 ergibt sich somit für die Steuerfrequenz der Steuerung 4 bei einer Wechselfrequenz von 1200 Hz der Betrag von 28.800 Hz. Die Regelung des digitalen Reglers wirkt in gleicher Weise auf den VCO ein, der jedoch nunmehr Frequenzschritte von etwa 24 Hz bei der hohen Schwingfrequenz ausführt, um an der Schaltersteuerung 6 der Schalterstufe 5 jeweils einen Frequenzschritt von etwa einem Hertz zu realisieren.

Es hat sich herausgestellt, dass durch diese Synchronisation des Serienschalters T1 mit den Schaltern T2, T3, T5 und T6 der Schalterstufe 5 eine deutliche Verbesserung des Brennverhaltens der Lampe L erreichbar ist. Die Ausführungsform gemäß Figur 3 stellt daher unter Qualitätsgesichtspunkten eine bevorzugte Ausführungsform dar, erfordert jedoch auch einen etwas erhöhten Aufwand.

## Patentansprüche

1. Vorschaltgerät für eine mit einem Lichtbogen brennende Lampe (L), mit einer eine Gleichspannung abgebenden Gleichspannungsstufe (1) und einer Umschalteinrichtung (5) zum Umschalten der Stromrichtung an zum Anschluss der Lampe (L) vorgesehenen Ausgängen (A) des Vorschaltgeräts mit einer Wechselfrequenz von mehr als 500 Hz, mit einer Verstelleinrichtung (8) für die Wechselfrequenz, sowie mit einer Analyseeinrichtung für das Brennverhalten des Lichtbogens, wobei die Verstelleinrichtung (8) eine Einstellung der Wechselfrequenz auf einen Startwert vornimmt und mit der Analyseeinrichtung das Brennverhalten des Lichtbogens bestimmt wird, **dadurch gekennzeichnet, dass** die Verstelleinrichtung für eine Einstellung der Wechselfrequenz bei dem Startwert auf zwei nahe beieinander liegenden Test-Wechselfrequenzen eingerichtet ist und die Analyseeinrichtung das Brennverhalten bei diesen Test-Wechselfrequenzen bestimmt und die Verstelleinrichtung eine Verstellung der Wechselfrequenz um einen Frequenzschritt in die durch diejenige Test-Wechselfrequenz, bei der die Analyseeinrichtung ein ruhigeres Brennverhalten festgestellt hat, vorgegebene Richtung vornimmt, wenn die Analyseeinrichtung bei keiner der analysierten Test-Wechselfrequenzen ein ausreichend ruhiges Brennverhalten festgestellt hat, wobei zur Feststellung des Brennverhaltens die Analyseeinrichtung dazu ausgelegt ist, für eine Test-Wechselfrequenz eine vorbestimmte Anzahl von Intensitätsbestimmungen vorzunehmen und aus den Unterschieden der gemessenen Intensitäten einen ersten Signalwert, sowie aus einer Mittelung der bestimmten Intensitäten einen zweiten Signalwert zu bestimmen, und als Kriterium für ein ausreichend ruhiges Brennverhalten die Unterschreitung eines ersten vorgegebenen Schwellwerts durch den ersten Signalwert bei gleichzeitiger Überschreitung eines zweiten vorgegebenen Schwellwerts durch den zweiten Signalwert dient.

2. Vorschaltgerät nach Anspruch 1, **dadurch gekennzeichnet dass** die Analyseeinrichtung für die Messung eines Stroms ausgelegt ist, wenn an die Ausgänge (A) die Lampe (L) angeschlossen ist.

3. Vorschaltgerät nach Anspruch 1 oder 2, **dadurch gekennzeichnet, dass** an die Gleichspannungsstufe (1) eine Stromregelstufe (3) angeschlossen ist, in der ein mit einer Hochfrequenz gesteuerter Schalter (T1) durch Unterbrechen und Öffnen eines Stromwegs eine Regelung des gemittelten Stroms bewirkt.

4. Vorschaltgerät nach Anspruch 3, **dadurch gekennzeichnet, dass** die Hochfrequenz des Schalters (T1) nach einer Teilung die Wechselfrequenz bildet und dass die Verstelleinrichtung (8) auf die Hochfrequenz des Schalters (T1) einwirkt.

5. Verfahren zur Steuerung eines Vorschaltgeräts für eine mit einem Lichtbogen brennende Lampe, mit einer eine Gleichspannung abgebenden Gleichspannungsstufe (1) und einer Umschalteinrichtung (5) zum Umschalten der Stromrichtung an zum Anschluss der Lampe (L) vorgesehenen Ausgängen (A) des Vorschaltgeräts mit einer Wechselfrequenz von mehr als 500 Hz und mit einer Verstelleinrichtung für die Wechselfrequenz, wobei eine Einstellung der Wechselfrequenz auf einen Startwert vorgenommen und dort das Brennverhalten des Lichtbogens festgestellt wird, **dadurch gekennzeichnet, dass** das Brennverhalten des Lichtbogens auf zwei nahe beieinander liegenden Test-Wechselfrequenzen bestimmt wird und eine weitere Verstellung der Wechselfrequenz um einen Frequenzschritt in die durch diejenige Test-Wechselfrequenz, bei der ein ruhigeres Brennverhalten festgestellt worden ist, vorgegebene Richtung erfolgt, wenn bei keiner der analysierten Test-Wechselfrequenzen ein ausreichend ruhiges Brennverhalten festgestellt worden ist, wobei für die Feststellung des Brennverhaltens für eine Test-Wechselfrequenz eine vorbestimmte Anzahl von Intensitätsbestimmungen vorgenommen wird und aus den Unterschieden der gemessenen Intensitäten ein erster Signalwert bestimmt wird, zugleich ein zweiter Signalwert aus den gemittelten Intensitäten bestimmt wird und als Kriterium für ein ausreichend ruhiges Brennverhalten die Unterschreitung eines ersten vorgegebenen Schwellenwerts durch den ersten Signalwert bei gleichzeitiger Überschreitung eines zweiten vorgegebenen Schwellenwerts durch den zweiten Signalwert dient.

## Claims

1. Ballast for a lamp (L) burning with an arc, having a DC voltage stage (1) that outputs a DC voltage and a switchover device (5) for switching over the current direction at outputs (A) of the ballast that are provided for connection of the lamp (L) at an alternating frequency of more than 500 Hz, having an adjustment device (8) for the alternating frequency, and having an analysis device for the burning behaviour of the arc, wherein the adjustment device (8) sets the alternating frequency to a starting value and the burning behaviour of the arc is determined by way of the analysis device, **characterized in that** the adjustment device is configured to set the alternating frequency at the starting value to two test alternating frequencies located close to one another and the analysis device determines the burning behaviour at said test alternating frequencies and the adjustment device adjusts the alternating frequency by a frequency step in the direction prescribed by that test alternating frequency at which the analysis device has ascertained a more settled burning behaviour, when the analysis device has not ascertained a sufficiently settled burning behaviour at any of the analysed test alternating frequencies, wherein, to ascertain the burning behaviour, the analysis device is embodied to perform a predetermined number of intensity determinations for a test alternating frequency and to determine a first signal value from the differences between the measured intensities and a second signal value from an average of the determined intensities, and the undershooting of a first prescribed threshold value by the first signal value with the simultaneous exceeding of a second prescribed threshold value by the second signal value serves as a criterion for a sufficiently settled burning behaviour.

2. Ballast according to Claim 1, **characterized in that** the analysis device is embodied to measure a current when the lamp (L) is connected to the outputs (A).

3. Ballast according to Claim 1 or 2, **characterized in that** a current regulation stage (3) is connected to the DC voltage stage (1), in which current regulation stage a switch (T1) controlled at a high frequency regulates the averaged current by interrupting and opening a current path.

4. Ballast according to Claim 3, **characterized in that** the high frequency of the switch (T1), after a division, forms the alternating frequency and **in that** the adjustment device (8) has an effect on the high frequency of the switch (T1).

5. Method for controlling a ballast for a lamp burning with an arc, having a DC voltage stage (1) that outputs a DC voltage and a switchover device (5) for switching over the current direction at outputs (A) of the ballast that are provided for connection of the lamp (L) at an alternating frequency of more than 500 Hz and having an adjustment device for the alternating frequency, wherein the alternating frequency is set to a starting value and there the burning behaviour of the arc is determined, **characterized in that** the burning behaviour of the arc is determined at two test alternating frequencies located close to one another and the alternating frequency is further adjusted by a frequency step in the direction prescribed by that test alternating frequency at which a more settled burning behaviour has been ascertained, when a sufficiently settled burning behaviour has not been ascertained in any of the analysed test alternating frequencies, wherein, to ascertain the burning behaviour, a predetermined number of intensity determinations are performed for a test alternating frequency and a first signal value is determined from the differences between the measured intensities, at the same time a second signal value is determined from the averaged intensities, and the undershooting of a first prescribed threshold value by the first signal value with the simultaneous exceeding of a second prescribed threshold value by the second signal value serves as a criterion for a sufficiently settled burning behaviour.

## Revendications

1. Ballast pour une lampe (L) éclairant avec un arc électrique, comportant un étage à tension continue (1) dégageant une tension continue et un dispositif de commutation (5) pour commuter la direction du courant à des sorties (A) du ballast prévues pour le raccordement de la lampe (L), à une fréquence alternative de plus de 500 Hz, comportant un moyen de réglage (8) pour la fréquence alternative et comportant un moyen d'analyse pour le comportement d'allumage de l'arc électrique,
dans lequel
le moyen de réglage (8) réalise un réglage de la fréquence alternative à une valeur de départ, et le moyen d'analyse détermine le comportement d'allumage de l'arc électrique,
**caractérisé en ce que**
le moyen de réglage est réalisé pour un réglage de la fréquence alternative à la valeur de départ à deux fréquences alternatives test proches l'une de l'autre, et le moyen d'analyse détermine le comportement d'allumage à ces fréquences alternatives test, et le moyen de réglage réalise un réglage de la fréquence alternative à raison d'un pas de fréquence dans la direction imposée par cette fréquence alternative test qui a constaté un comportement d'allumage plus calme dans le moyen d'analyse, lorsque le moyen d'analyse n'a constaté un comportement d'allumage suffisamment calme à aucune des fréquences alternatives test analysées, et pour constater le comportement d'allumage le moyen d'analyse est conçu pour réaliser un nombre prédéterminé de déterminations d'intensité pour une fréquence alternative test, et pour déterminer, à partir des différences des intensités mesurées, une première valeur de signal, et pour déterminer, à partir d'une moyenne des intensités déterminées, une seconde valeur de signal, et en tant que critère pour un comportement d'allumage suffisamment calme, il est prévu de faire passer la première valeur de signal au-dessous d'une première valeur seuil donnée et simultanément de faire passer la seconde valeur de signal au-dessus de la seconde valeur seuil donnée.

2. Ballast selon la revendication 1, **caractérisé en ce que** le moyen d'analyse est conçu pour mesurer un courant lorsque la lampe (L) est raccordée aux sorties (A).

3. Ballast selon la revendication 1 ou 2, **caractérisé en ce qu'**un étage de régulation de courant (3) est raccordé à l'étage à tension continue (1), dans lequel un commutateur (T1) commandé à haute fréquence provoque une régulation du courant moyenné par interruption et par ouverture d'un trajet de courant.

4. Ballast selon la revendication 3, **caractérisé en ce que** la haute fréquence du commutateur (T1) constitue la fréquence alternative après une subdivision, et **en ce que** le moyen de réglage (8) agit sur la haute fréquence du commutateur (T1).

5. Procédé de commande d'un ballast pour une lampe éclairant avec un arc électrique, comportant un étage à tension continue (1) dégageant une tension continue et un dispositif de commutation (5) pour commuter la direction du courant à des sorties (A) du ballast prévues pour le raccordement de la lampe (L), à une fréquence alternative de plus de 500 Hz, comportant un moyen de réglage pour la fréquence alternative,
dans lequel on réalise un réglage de la fréquence alternative à une valeur de départ et on constate ici le comportement d'allumage de l'arc électrique, **caractérisé en ce que**
le comportement d'allumage de l'arc électrique est déterminé à deux fréquences alternatives test proches l'une de l'autre, et un autre réglage de la fréquence alternative est effectué à raison d'un pas de fréquence dans la direction imposée par cette fréquence alternative test, à laquelle a été constaté un comportement d'allumage plus calme, lorsqu'un comportement d'allumage suffisamment calme n'a été constaté à aucune des fréquences alternatives test analysées, et pour constater le comportement d'allumage un nombre prédéterminé de déterminations d'intensité est réalisé pour une fréquence alternative test, et à partir des différences des intensités mesurées, une première valeur de signal est déterminée et simultanément une seconde valeur de signal est déterminée à partir des intensités moyennées, et en tant que critère pour un comportement d'allumage suffisamment calme, il est prévu de faire passer la première valeur de signal au-dessous d'une première valeur seuil donnée et simultanément de faire passer la seconde valeur de signal au-dessus d'une seconde valeur seuil donnée.
